# EUROPÄISCHE PATENTSCHRIFT

(11) **EP 0 812 614 B1**
(45) Veröffentlichungstag und Bekanntmachung des Hinweises auf die Patenterteilung: **30.12.1998**
(21) Anmeldenummer: 97109542.7
(22) Anmeldetag: 12.06.1997
(51) Int. Cl.: B01F 3/14, B01F 17/00

(54) **Homogenisierung von Dispersionen**
Process for homogenising dispersions
Procédé d'homogénénisation de dispersions

(30) Priorität: 14.06.1996 DE 19623850
(43) Veröffentlichungstag der Anmeldung: 17.12.1997
(73) Patentinhaber: Wacker-Chemie GmbH, 81737 München (DE)
(72) Erfinder: Grune, Burkhard, 84489 Burghausen (DE); Hager, Ludwig, 84489 Burghausen (DE); Huber, Helmut, 84547 Emmerting (DE); Lwowski, Gerhard, 84489 Burghausen (DE); Zadny, Wilhelm, 5122 Ach (AT); Müller, Horst, Dr., 84547 Emmerting (DE); Schneider, Otto, Dr., 84489 Burghausen (DE)
(74) Vertreter: Fritz, Helmut, Dr.

(56) Entgegenhaltungen:
- EP-A- 0 726 086
- EP-B- 0 060 313
- EP-B- 0 184 683
- GB-A- 818 489
- US-A- 5 222 807

## Beschreibung

Die Erfindung betrifft ein Verfahren zur Herstellung von homogenen Dispersionen fluidisierbarer Schüttgüter, bei dem eine Rohdispersion mit einer Zwangsfördereinrichtung durch eine kontinuierliche geschlossene Dispergiereinrichtung gefördert wird.

Fluidisierbare Schüttgüter sind feinteilig und können mit Luft zu fließfähigen Gemischen verwirbelt werden. Derartige Schüttgüter neigen in Dispersion zum Agglomerieren. Homogene Dispersionen aus Flüssigkeit und fluidisierbaren Schüttgütern sind deshalb schwer herzustellen.

Beispielsweise werden derartige Dispersionen hergestellt, indem fluidisierte hochdisperse Kieselsäure mit Siliconöl vermischt wird. Diese Rohdispersion wird über einen Walzenstuhl gegeben, wo sie durch enge Spalten zwischen den Walzen intensiv geschert und dadurch homogenisiert wird.

Walzenstühle weisen jedoch die Nachteile auf, daß bedingt durch ihre offene Bauweise und große Walzenoberfläche Verunreinigungen, wie Staub leicht in die Dispersion eindringen können und leichtflüchtige Bestandteile der Dispersion verdampfen können. Beim Walzen kann die Dispersion statisch aufgeladen werden. Deshalb müssen Walzenstühle sehr häufig in eigenen explosionsgeschützten, staubfreien und gut entlüfteten Räumen aufgestellt werden.

Aufgabe der vorliegenden Erfindung war es, ein Verfahren zur kontinuierlichen Herstellung von homogenen Dispersionen fluidisierbarer Schüttgüter bereitzustellen, wobei die vorstehenden Nachteile der Walzenstühle nicht auftreten.

Die Erfindung betrifft ein Verfahren zur Herstellung von homogenen Dispersionen fluidisierbarer Schüttgüter, bei dem in einem ersten Schritt fluidisierbare Schüttgüter mit Flüssigkeit zu einer Rohdispersion mit einer Zwangsfördereinrichtung durch eine kontinuierliche geschlossene Dispergiereinrichtung gefördert wird, dadurch gekennzeichnet, daß als fluidisierbares Schüttgut pyrogen hergestellte oder gefallte Kieselsäure mit einer BET-Oberfläche von mindestens 50 m²/g und als Flüssigkeit Siliconöl eingesetzt wird.

Durch das vorliegende Verfahren werden homogene Dispersionen erhalten. Verklumpungen werden ebenso gut aufgeschlossen, wie bei Walzenstühlen.

Ferner dringen durch die geschlossene Bauweise der Dispergiereinrichtung weder Verunreinigungen in die Dispersion, noch verdampfen leichtflüchtige Bestandteile der Dispersion in die Umgebungsatmosphäre. Es finden auch keine statischen Aufladungen der Dispersion statt.

Die geschlossene Bauweise erlaubt auch das Arbeiten unter erhöhtem oder vermindertem Druck, der beispielsweise durch die Zwangsfördereinrichtung, ein Druckgefäß oder Preßluft eingestellt werden kann.

Wenn das gesamte Verfahren in einer geschlossenen Vorrichtung durchgeführt wird, ist es über eine automatische Prozeßsteuerung fahrbar.

Die Siliconöle weisen vorzugsweise eine Viskosität von mindestens 0,1, insbesondere 0,5 mPa·s und höchstens von 10⁶, insbesondere 10⁵ mPa·s auf. Vorzugsweise weisen die Siliconöle eine Viskosität von mindestens 10 mPa·s auf.

Es handelt es sich bei den fluidisierbaren Schüttgütern um verstärkende Füllstoffe, also Füllstoffe mit einer BET-Oberfläche von mindestens 50 m²/g, nämlich pyrogen hergestellte Kieselsäure und gefällte Kieselsäure.

Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen als Schüttgut eingesetzt werden.

Das vorliegende Verfahren ist für die Herstellung beliebiger Dispersionen geeignet. Beispielsweise können Lacke, Farben, kosmetische und medizinische Cremes und Salben, Pasten und Flüssigsiliconkautschuke hergestellt werden.

Besonders geeignet ist das Verfahren zur Herstellung von Dispersionen von Kieselsäure mit einer BET-Oberfläche von mindestens 50 m²/g in Siliconöl, da die Kieselsäure darin besonders leicht zum Verklumpen neigt. Bei diesen Dispersionen kann die Viskosität durch Einbringen von Scherenergie verringert werden.

Im ersten Schritt kann die Rohdispersion in einer beliebigen Mischeinrichtung hergestellt werden. Als Mischeinrichtung sind beispielsweise geeignet Rührwerk, IN-LINE Mischer oder Dispergierer.

Als Zwangsfördereinrichtung kann eine Pumpe in Strömungsrichtung vor oder nach der Dispergiereinrichtung angeordnet sein. Als Pumpe kann jede Pumpe eingesetzt werden, welche Flüssigkeiten fördert. Beispiele für geeignete Pumpen sind Kreisel-, Schlauch-, Kolben- oder Membranpumpe.

Mit Hilfe der Zwangsfördereinrichtung kann der Durchsatz an Dispersion durch die Dispergiereinrichtung beeinflußt werden. Der Durchsatz beeinflußt wiederum die Scherenergie, die auf die Dispersion einwirkt, wodurch Viskosität und Temperatur der Dispersion gesteuert werden.

Als Dispergiereinrichtung wird vorzugsweise ein geschlossener rotierender Zahnkranzdispergierer, ein geschlitzter Rotor-Stator oder eine Kolloidmühle eingesetzt. Vorzugsweise ist die Dispergiereinrichtung vertikal angeordnet, damit Gasblasen nicht durchschlagen können. In der Dispergiereinrichtung können verschieden stark scherende Dispergierwerkzeuge ausgewechselt werden. Vorzugsweise ist der Reibspalt in der Dispergiereinrichtung einstellbar.

Die Dispergiereinrichtung kann auch fördernde Eigenschaften aufweisen. Dies ist hilfreich beim Verarbeiten von Dispersionen ab 1000, insbesondere 5000 mPa·s.

Die Dispergiereinrichtung benötigt eine geringere Antriebsleistung als ein Walzenstuhl. Beispielsweise verarbeit ein IN-LINE Dispergierer mit einer Antriebsleistung von 20 kW 1000 bis 1100 kg/h einer Siliconöl/Kieselsäuredispersion einer Viskosität von 30000 mPa·s. Ein 3-Walzenstuhl benötigt für die Verarbeitung von nur 400 kg/h der gleichen Dispersion eine Antriebsleistung von 18 kW.

Durch den niedrigen Energieeintrag heizt sich die Dispersion in der Dispergiereinrichtung weniger auf als auf dem Walzenstuhl. Üblicherweise kann deshalb bei Verwendung einer Dispergiereinrichtung auf zusätzliche Kühlung verzichtet werden.

Vorzugsweise ist der Dispergiereinrichtung ein Strainer nachgeschaltet.

Bei der Herstellung der Dispersionen von Kieselsäure mit einer BET-Oberfläche von mindestens 50 m²/g in Siliconöl kann ein Reaktor zwischen Mischeinrichtung und Dispergiereinrichtung angeordnet sein. Im Reaktor kann die Rohdispersion bei einer gewünschten Temperatur behandelt werden. Gegebenenfalls können im Reaktor Zusätze zur Rohdispersion gegeben werden.

## Patentansprüche

1. Verfahren zur Herstellung von homogenen Dispersionen fluidisierbarer Schüttgüter, bei dem in einem ersten Schritt fluidisierbare Schüttgüter mit Flüssigkeit zu einer Rohdispersion vermischt werden und in einem zweiten Schritt die Rohdispersion mit einer Zwangsfördereinrichtung durch eine kontinuierliche geschlossene Dispergiereinrichtung gefördert wird, dadurch gekennzeichnet, daß als fluidisierbares Schüttgut pyrogen hergestellte oder gefällte Kieselsäure mit einer BET-Oberfläche von mindestens 50 m²/g und als Flüssigkeit Siliconöl eingesetzt wird.

2. Verfahren nach Anspruch 1, bei dem das Siliconöl eine Viskosität von mindestens 0,1 und höchstens von 10⁶ mPa·s aufweist.

## Claims

1. Method for preparing homogeneous dispersions of fluidizable bulk materials, in which, in a first step, fluidizable bulk materials are blended with liquid to produce a raw dispersion and, in a second step, the raw dispersion is conveyed through a continuous enclosed dispersing apparatus by means of a forced-conveyance apparatus, characterized in that the fluidizable bulk material used is fumed or precipitated silicic acid having a BET surface area of at least 50 m²/g, and the liquid used is silicone oil.

2. Method according to Claim 1 in which the silicone oil has a viscosity of at least 0.1 and at most 10⁶ mPa·s.

## Revendications

1. Procédé de préparation de dispersions homogènes de matières en vrac fluidisables, dans lequel des matières en vrac fluidisables sont mélangées, dans une première étape, avec un liquide pour donner une dispersion brute, et la dispersion brute est acheminée, dans une deuxième étape, avec un dispositif de transport forcé à travers un disperseur fermé continu, caractérisé en ce que l'on utilise, en tant que matière en vrac fluidisable, de la silice précipitée ou préparée par pyrogénation ayant une surface BET d'au moins 50 m²/g, et, en tant que liquide, de l'huile de silicone.

2. Procédé selon la revendication 1, dans lequel l'huile de silicone présente une viscosité d'au moins 0,1 et d'au plus 10⁶ mPa.s.
